# EUROPÄISCHE PATENTSCHRIFT

(11) **EP 1 062 535 B1**
(45) Veröffentlichungstag und Bekanntmachung des Hinweises auf die Patenterteilung: **10.04.2002**
(21) Anmeldenummer: 99907275.4
(22) Anmeldetag: 15.01.1999
(51) Int. Cl.: G02B 6/42

(54) **MEHRKANALIGES OPTISCHES MODUL**
MULTIPLE CHANNEL OPTICAL MODULE
MODULE OPTIQUE A CANAUX MULTIPLES

(30) Priorität: 16.01.1998 DE 19802190
(43) Veröffentlichungstag der Anmeldung: 27.12.2000
(73) Patentinhaber: Infineon Technologies AG, 81669 München (DE)
(72) Erfinder: SCHULZ, Klaus, D-12309 Berlin (DE); KNEIER, Michael, D-13407 Berlin (DE); OELZE, Oliver, D-12435 Berlin (DE)
(74) Vertreter: Müller, Wolfram Hubertus, Dipl.-Phys.
(86) Internationale Anmeldenummer: DE9900176
(87) Internationale Veröffentlichungsnummer: WO9936819

(56) Entgegenhaltungen:
- EP-A- 0 566 900
- EP-A- 0 613 032
- US-A- 4 279 465
- US-A- 5 028 110
- US-A- 5 528 408

## Beschreibung

Die Erfindung liegt auf dem Gebiet der elektrooptischen Datenübertragung. Zur elektrooptischen Datenübertragung werden allgemein auch als elektrooptische Module bezeichnete Sende-und/oder Empfangseinheiten eingesetzt, die elektrische Signale in optische Signale und/oder optische in elektrische Signale wandeln. Zur eigentlichen Signalwandlung dienen elektrooptische Wandler, die beispielsweise als Laserdioden (Sender) oder Photodioden (Empfänger) ausgebildet sein können und jeweils Wandlerflächen aufweisen, die auch als optisch aktive Zonen bezeichnet werden.

Für die Datenübertragung mittels Lichtwellenleiter können die Module mit mechanischen Kopplungsvorrichtungen zur Ausrichtung und mechanischen Verbindung mit einem Lichtwellenleiter-Steckverbinder ausgerüstet sein; diese Kopplungseinrichtungen werden nachfolgend auch als Anschluß-Ports oder Steckbuchten bezeichnet. Unter dem Begriff Lichtwellenleiter sind im Rahmen der vorliegenden Erfindung sämtliche Elemente, wie z.B. Glas- oder Kunststoffasern, zu verstehen, die zur gerichteten Weiterleitung optischer Wellen geeignet sind.

Aus der SIEMENS-FIRMENZEITSCHRIFT "FDDI LOW-COST TRANSCEIVER" (RefNr A 23001-G40-P 024-X-7600), 1993, ist ein elektrooptisches Modul bekannt, das einen separaten Empfangskanal und einen separaten Sendekanal aufweist. Das bekannte Modul ist für jeden Kanal mit einem separaten, individuellen Anschluß-Port ausgerüstet. Jeder Anschluß-Port weist jeweils eine Zentrierhülse zur Aufnahme eines Lichtwellenleiter-Steckerstiftes und Rastarme als Verriegelungselemente auf, die mit entsprechenden Hinterschneidungen am Steckverbinder-Gehäuse zusammenwirken. Damit ist eine mechanische Fixierung des eingesteckten Steckverbinders in den jeweiligen Port sichergestellt. Die Steckerstifte sind als genormte Stifte (Ferrulen) ausgebildet und nehmen in einer zentralen Längsbohrung jeweils einen einzigen Lichtwellenleiter auf, der an der Steckerstift-Stirnfläche endet. Die zentrische Lichtwellenleiterführung erfordert keine rotatorische Ausrichtung oder Fixierung des Steckerstiftes.

Die Aufnahmehülse und die mechanische Verriegelung sind in ihren Geometrien und hinsichtlich ihrer für den jeweiligen Steckverbinder relevanten Maße gemäß dem Japanischen Industrie Standard JIS-C-5973-1990 gestaltet. In diesem Standard sind u.a. die Länge und der Durchmesser des Steckerstiftes, die Verbindergehäuse-Abmessungen und die Lage und Gestalt der Formelemente festgelegt, die mit der mechanischen Verriegelung des Anschluß-Ports zusammenwirken. Ein derartiger Standard-Steckverbinder wird allgemein als SC-Steckverbinder bezeichnet. Ein zur Ankopplung eines derartigen SC-Steckverbinders ausgebildeter Anschluß-Port wird demgemäß als SC Anschluß-Port oder SC-Steckbucht (SC-Receptacle) bezeichnet.

Wie auch der bekannte Transceiver zeigt, ist also bei solchen Konfigurationen für jeden Übertragungskanal ein gesonderter SC-Anschluß-Port vorgesehen, mit dessen Hilfe jeweils ein einziger elektrooptischer Wandler über einen optischen Pfad in die Lichtwellenleiterendfläche abstrahlt (Sender) bzw. aus der Endfläche austretende Strahlung aufnimmt (Empfänger).

Mit Zunahme der zu übertragenden Datenmengen wächst das Bedürfnis nach paralleler Datenübertragung zwischen zwei Orten oder zumindest nach paralleler Empfangs- bzw. Sendemöglichkeit an einem Ort. Zur Befriedigung dieses Bedürfnisses bietet sich grundsätzlich die Verwendung entsprechend mehrerer einkanaliger Module an, was sich in vielen Anwendungen bisher auch durchgesetzt hat.

Eine weitere Möglichkeit ist die Entwicklung spezieller Steckerformen. Bei einem bekannten mehrkanaligen optischen Modul sind mehrere elektrooptische Wandler einem Anschluß-Port zugeordnet. Der Anschluß-Port dient zur Aufnahme und Verriegelung eines Steckers, der mehrere Lichtwellenleiter enthält. Die Wandler sind über waveguides (optische Pfade) nebeneinander auf eine senkrecht zur Steckrichtung verlaufende Kopplungsebene ausgerichtet. Der Anschluß-Port weist eine Aufnahme für den Stecker und mit dem Stecker mechanisch zusammenwirkende Verriegelungselemente auf. Zur gegenseitigen Ausrichtung von Anschluß-Port und Stecker - in dem die Lichtwellenleiter entlang einer Längsebene verlaufen - ist die Aufnahme zugleich als Ausrichthilfe ausgebildet, die mit einer korrespondierenden Ausgestaltung des Steckers derart zusammenwirkt, daß im Bereich der Kopplungsebene jeweils ein Wandler individuell mit einem Ende eines der Lichtwellenleiter koppelbar ist. Hierbei erfolgt die gegenseitige Ausrichtung von Anschluß-Port und Stecker über einen Formschluß des Steckers in der Aufnahme. Damit sich der Stecker in die Aufnahme des Anschluß-Ports einfügen läßt und sich dabei trotzdem geringe Koppelverluste einhalten lassen, müssen bei der Fertigung sehr geringe maximale Abweichungen (Toleranzen) von den Nennmaßen eingehalten werden. Der Stecker kann bei Kontakt mit den Lichteintritts- bzw. Lichtaustrittsflächen der waveguides axial nicht zurückweichen. Insbesondere bei häufigen Steckzyklen unterliegen die Stirnflächen der Lichtwellenleiterenden daher einer erhöhten Beschädigungsgefahr (EP 0 618 468 A1).

In Hinblick auf den mit steigender Modulanzahl entsprechend steigenden Platzbedarf ist es jedoch wünschenswert, auch andere Lösungen anbieten zu können. Dabei sollte im Interesse des Anwenders die Handhabung der Module z.B. während Verpackungs-, Prüf-, und Montageprozessen weiterhin mit ähnlichen und vorzugsweise mit denselben Einrichtungen möglich sein.

Die Aufgabe der Erfindung besteht daher in der Schaffung eines Moduls, das bei erheblich reduziertem Platzbedarf oder erheblich erhöhter Modulfunktionalität/Kanalanzahl weiterhin in gewohnter Weise handhabbar und leicht mit den anzuschließenden Lichtwellenleitern koppelbar ist.

Diese Aufgabe wird durch die im Patentanspruch 1 aufgeführten Merkmale gelöst. Diese Lösung sieht im wesentlichen vor, den Anschluß-Port in an sich bekannter Weise so auszugestalten, daß ein Steckerstift, der mehrere Lichtwellenleiter enthält, aufgenommen werden kann und hierbei in neuartiger Weise die Zentrierung zwischen Stecker und Anschluß-Port durch eine bisher nur für einpolige Stecker gebräuchliche zylindrische Ausgestaltung zu gewährleisten und zur definierten Ausrichtung der optischen Pfade und der anzukoppelnden Lichtwellenleiter die ineinandergreifenden zylindrischen Komponenten mit entsprechenden Ausrichthilfen zu versehen, wobei die optischen Pfade, über die die Wandler auf eine Kopplungsebene ausgerichtet sind, in einem gemeinsamen Koppelkörper verlaufen, der den Pfadverlauf wandlerseitig aufspreizt.
Unter dem Begriff "Ausrichthilfen" sind alle Bauelemente zu verstehen, die für den Fachmann erkennbar den Zweck einer gegenseitigen Positionierung mit korrespondierenden Geometrien des Steckverbinders erfüllen. Als geeignete Ausrichthilfen erweisen sich insbesondere Körper mit langgestreckten Geometrien, z.B. Zylinderstifte, Stifte oder Stäbe mit einem polygonen Querschnitt oder Bolzen, die beidseits der Längsachse der Aufnahmehülse angeordnet sind oder auch Längsstege oder Längsrippen, die innenseitig an der Aufnahmehülse ausgebildet sind.

Ein wesentlicher vorteilhafter Aspekt des erfindungsgemäßen Moduls besteht darin, daß mit einem einzigen Anschluß-Port die Ankopplung mehrerer Lichtwellenleiterenden möglich ist.

Besonders vorteilhaft ist dabei, daß aufgrund der SC-steckverbindergemäßen Ausgestaltung des Anschluß-Ports die Lichtwellenleiter in bisher üblicher und beherrschter Weise an das Modul bzw. an die darin enthaltenen optischen Wandler angekoppelt werden können.

Das erfindungsgemäße Modul verläßt damit in Abkehr von üblichen Entwicklungstendenzen den Weg einer kontinuierlichen Miniaturisierung unter prinzipieller Beibehaltung der bisherigen Grundkonstruktion und wendet sich vielmehr einer neuen Anschlußzuordnung und Anschlußgestaltung unter Verwendung des SC-Anschluß-Prinzips zu. Über einen einzigen Anschluß-Port lassen sich damit bei dem erfindungsgemäßen Modul mehrere Lichtwellenleiterenden ankoppeln, womit eine Verdoppelung oder Vervielfachung der Modulfunktionalität bei unveränderter Gehäusebauform ermöglicht ist. Damit ist entweder eine Verkleinerung der Bauform um mindestens den Faktor 2 - d.h. zur Realisierung eines sog. "Small Form Factor/SFF-Modules" mindestens eine Halbierung der benötigten Gehäusegrundfläche - bzw. eine entsprechende Erhöhung der Packungsdichte oder der Kanalanzahl möglich.

Die Ausgestaltung des erfindungsgemäßen Moduls ermöglicht eine weitere Beabstandung der Wandler als dies durch den lateralen Abstand der Lichtwellenleiterenden vorgegeben ist. Dies ist besonders bevorzugt, wenn der Steckverbinder vorteilhafterweise zwei oder vier Lichtwellenleiter endseitig abschließt.

In konstruktiver Hinsicht ist eine Ausgestaltung der Erfindung vorteilhaft, nach der die Wandler vertikal emittierende Lasersender sind. Dies ermöglicht beispielsweise eine Hochkantanordnung jeweils mehrere Wandler tragender Platinen, wobei sich die Wandler vorzugsweise mit ihren optisch aktiven Zonen gegenüber liegen. Bevorzugt beträgt die Emissionswellenlänge der Lasersender 850 oder 1300 nm.

Das erfindungsgemäße Modul findet bevorzugt Anwendung in Modulanordnungen mit zwei oder mehreren Modulen. Bei Verwendung von zwei Modulen kann vorteilhafterweise die bisher übliche Modulgehäusegröße des beispielsweise eingangs beschriebenen Transceivers beibehalten werden, wobei entsprechend der Anzahl der jeweils parallel zu einem der Anschluß-Ports geführten Lichtwellenleiterenden eine Verdoppelung oder Vervielfachung der Kanalkapazität erreicht ist. Bevorzugt ist dabei eines der Module mit als Sendern ausgebildeten Wandlern und das andere Modul mit als Empfänger ausgebildeten Wandlern bestückt. Die Modulanordnung kann bevorzugt beide Module in einem gemeinsamen Gehäuse aufweisen, dessen Grundfläche 26mm x 40mm, vorzugsweise 25,40mm x 39,12mm nicht unterschreitet.

Die Erfindung wird nachfolgend anhand zeichnerisch dargestellter Ausführungsbeispiele weiter erläutert; es zeigen:
Figur 1 ein Modul mit einem gegenüberliegenden Steckverbinder als Kopplungspartner,
Figur 2 die Anordnung nach Figur 1 aus modulrückwärtiger Perspektive,
Figur 3 den stark vergrößerten Bereich zwischen der Steckverbinder-Stirnseite und dem Modul gemäß Figur 2 und
Figur 4 eine Modulanordnung in Aufsicht.

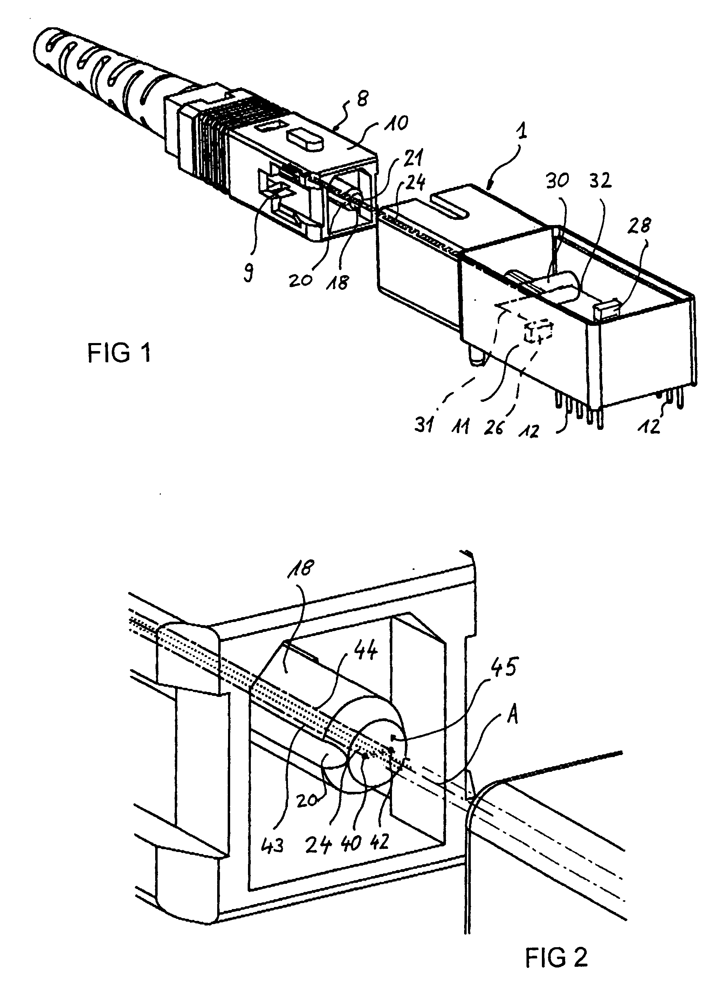

Zur besseren Übersicht zeigen die Darstellungen in den Figuren 1 bis 3 den Steckverbinder kurz vor dem vollständigen Einführen in den Anschluß-Port.

In Figur 1 und 2 ist ein mehrkanaliges optisches Modul mit einem Anschluß-Port 1 gezeigt, der hinsichtlich seiner wesentlichen Abmessungen (insbesondere bezüglich einer mechanischen Verriegelung 2 und einer Aufnahmehülse 4) zur Aufnahme eines SC-Steckverbinders gemäß dem Japanischen Industriestandard JIS-C-5973-1990 als komplementäre SC-Steckbucht (SC-Receptacle) ausgebildet ist. Auf den Industriestandard JIS-C-5973-1990 wird hiermit ausdrücklich als Referenz verwiesen. Die mechanische Verriegelung 2 umfaßt zwei Verriegelungsarme 5, 6, die mit Verriegelungsnasen 5a, 6a in korrespondierende Hinterschneidungen 8, 9 eines Steckverbindergehäuses 10 einrasten, wenn der Steckverbinder vollständig in den Anschluß-Port 1 eingeführt ist. Das Modul umfaßt ferner ein Gehäuse 11 und eine Mehrzahl von elektrischen Anschlußkontakten 12, die z.B. in zwei Reihen zu je 5 Kontakten oder anderweitig (z.B. 1*9 oder 2*10) angeordnet sein können.

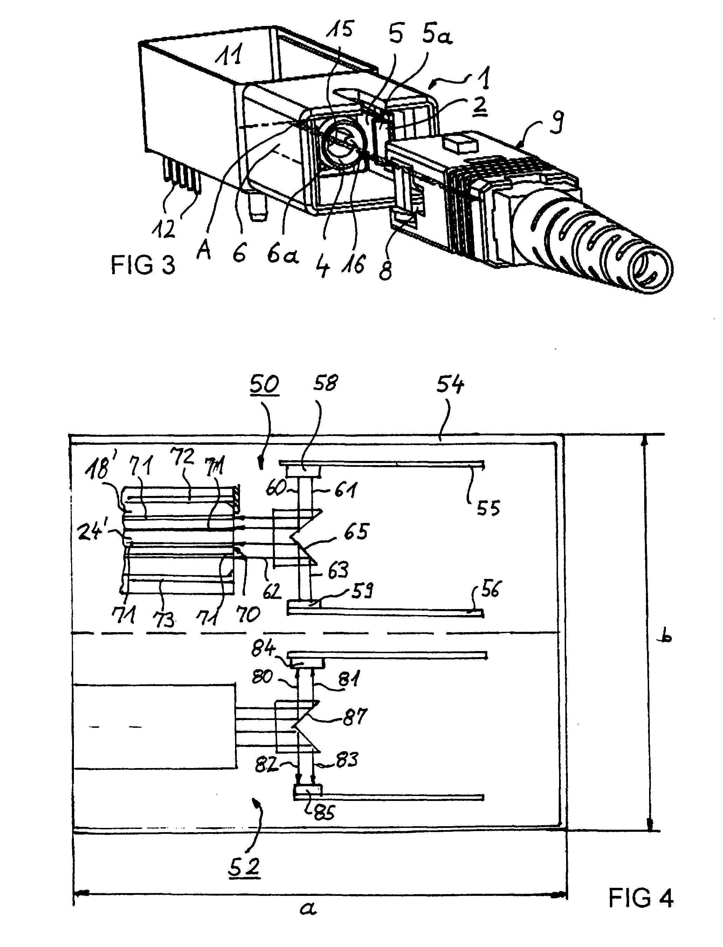

Wie Figur 1 zeigt, ist die Aufnahmehülse 4 innenseitig mit Längserhebungen z.B. in Form von Längsstegen oder Längsrippen 14, 15 versehen, die in radialer Richtung zur Längsachse A der Aufnahmehülse 4 hin weisen. Die Längsstege 14, 15 dienen als Ausrichthilfen, die mit gegenüberliegend am Umfang eines Steckerstiftes 18 ausgebildeten Längsnuten oder Rillen 20, 21 zusammenwirken (Figuren 2 und 3).

Durch das Zusammenwirken der Ausrichthilfen 14,15 und 20, 21 ist - wie Figur 3 verdeutlicht - dafür gesorgt, daß eine die Steckerstift-Längsachse A einschließende zentrale Längsebene 24 in definierter Lage in Bezug auf das Modul ausgerichtet ist, sobald der Steckerstift 18 in die Aufnahmehülse 4 eingeführt ist. Als Ausrichthilfen sind außer der integralen Formung von Stegen in der Aufnahmehülse 4 auch viele andere Gestaltungen denkbar; beispielsweise kann die Hülse beiderseits ihrer Längsachse in einer Ebene 24 angeordnete Zentrierstifte aufweisen, die mit geeigneten Nuten oder Bohrungen des Steckerstiftes 18 zusammenwirken.

In dem Modulgehäuse 11 sind mehrere elektrooptische Wandler 26, 28 angeordnet. Die Wandler können Laserdioden ein, die Licht mit einer Wellenlänge von 850nm oder 1300nm aussenden. Im Ausführungsbeispiel nach Figur 2 sind beispielhaft nur zwei Wandler gezeigt. Die Wandler 26, 28, bzw. deren optische aktiven Zonen sind über einen Koppelkörper 30 derart auf eine Querschnittsebene, die mit der Stirnfläche des eingesteckten Steckerstifts 18 zusammenfällt, abgebildet, daß optische Pfade 31, 32 zwischen den Wandlern 26, 28 und den Enden 40, 42 von zwei gemeinsam in der Ebene 24 angeordneten Lichtwellenleitern 43, 44 verlaufen. Ein ebenfalls geeigneter Koppelkörper ist in der am 24.09.97 eingereichten deutschen Patentanmeldung mit dem amtl. Aktenzeichen 197 42 895.9 offenbart. In der Ebene 24 können auch z.B. vier Lichtwellenleiter Lichtwellenleiter, angeordnet sein und an der Stirnfläche 45 des Steckerstiftes 18 enden. Das Modul stellt somit mehrere getrennte Datenübertragungskanäle bereit, die mit separaten und individuellen Lichtwellenleiterenden koppelbar sind, die in einem gemeinsamen SC-Steckverbinder angeordnet sind.

Figur 4 zeigt eine Modulanordnung, bei der zwei erfindungsgemäße Module 50, 52 in einem gemeinsamen, geöffnet dargestellten Gehäuse 54 untergebracht sind. Die Grundfläche des Gehäuses weist Maße von a= 39,12mm und b=25,40mm auf und enspricht damit z.B. der Modulbaugröße des eingangs beschriebenen Moduls. Übersichtlichkeitshalber sind in Figur 4 nur die für die nachfolgende Erläuterung besonders wesentlichen Teile der Modulanordnung stark vereinfacht und schematisch dargestellt.

Das Modul 50 enthält zwei Leiterplatten 55, 56, auf denen je eine Steuerschaltung für zwei Laserarrays 58, 59 plaziert ist. Die Laserarrays 58, 59 sind als oberflächenemittierende Laser (sogenannte vertikalemittierende Laser/VCSEL) ausgebildet. Der Strahlengang verläuft über optische Pfade 60 bis 63 teilweise durch einen gemeinsamen Koppelkörper 65 und wird jeweils an einer Spiegelfläche umgelenkt. Wie andeutungsweise dargestellt, spreizt der Koppelkörper 65 den Pfadverlauf wandlerseitig auf, so daß mehr Bauraum und Beabstandung zwischen den Leiterplatten 55, 56 gewonnen ist. Die optischen Pfade 60 bis 63 bilden die aktiven Zonen der einzelnen Laser auf einer gemeinsamen Kopplungsebene 70 ab, in der auch die Stirnflächen von vier andeutungsweise dargestellten, in dem Steckerstift 18' verlaufenden Lichtwellenleiterenden liegen.

Der Steckerstift 18' liegt mit seiner Stirn an einer Anschlagläche. In der teilweisen Schnittdarstellung im oberen Teil der Figur 4 sind entlang dem Steckerstift 18' andeutungsweise anschlußportseitige Ausrichthilfen in Form von Zentrierstiften 72, 73 erkennbar. Diese Zentrierstifte wirken im Zusammenhang mit den in den Figuren 1 bis 3 beschriebenen Ausnehmungen oder Längsnuten des Steckerstiftes 18' derart zusammen, daß die die Lichtwellenleiterenden 71 enthaltende Ebene 24 auf die Ebene der optischen Pfade 60 bis 63 ausgerichtet ist. Zur Vereinfachung sind die Verriegelungselemente der Module 50, 52 in Figur 4 nicht gezeigt.

In dem unteren Teil der Figur 4 sind in starker Vereinfachung die bereits prinzipiell beschriebenen Elemente dargestellt. Wie durch entsprechende Pfeile der optischen Pfade 80 bis 83 verdeutlicht, sind die elektrooptischen Wandler beim Modul 52 als Empfangsarrays 84, 85 mit jeweils mehreren (z.B. 2) photosensitiven Zonen ausgebildet. Der Strahlengang bzw. die optischen Pfade 80, 82 verlaufen ansonsten in vorbeschriebener Weise über einen gemeinsamen Koppelkörper 87. Die Modulanordnung nach Figur 4 weist damit in einer Baugröße, die üblichen Transceivergehäusen mit nur einem seperaten Empfangskanal und einem seperaten Sendekanal entspricht, jeweils vier Sendebzw. Empfangskanäle auf. Die Ankopplung an die Modulanordnung kann vorteilhafterweise mittels sogenannter SC-DC-(Dual Connector)- oder SC-QC-(Quadruple Connector)-Steckverbinder erfolgen, wobei jeder Steckverbinder in seinen wesentlichen Abmaßen und Verriegelungsmechanismen dem genannten SC-Standard entspricht und die jeweils in einer gemeinsamen Ebene verlaufende Lichtwellenleiter abschließt.

Die mit dem Aufbauprinzip des erfindungsgemäßen Moduls realisierbare besonders bevorzugte Kombinationen sind in nach folgender Tabelle 1 beispielhaft zusammengestellt; selbstverständlich können auch andere Ausgestaltungen realisiert werden, ohne den Rahmen der vorliegenden Erfindung zu verlassen.

**Tabelle 1:**

| Packungsdichte/ | SFF [SmallFormFactor] | SFF [SmallFormFactor] | LCF [LowCostFDDI] | LCF [LowCostFDDI] |
|---|---|---|---|---|
| Anschluß-Port | SC-DC | SC-QC | SC-DC | SC-QC |
| Anschlußkontakte [Reihe(n)*Anzahl] | 1*9; 2*5; 2*10 | 1*9; 2*5; 2*10 | 1*9; 2*5; 2*10 | 1*9; 2*5; 2*10 |
| Lichtquelle / Sender | VCSEL, LED, Laserdiode | VCSEL, LED, Laserdiode | VCSEL, LED, Laserdiode | VCSEL, LED, Laserdiode |
| Wellenlänge [nm] | 850 / 1300 | 850 / 1300 | | |
| Funktion | Transceiver TRX | 4-fach Receiver Rx oder 4fach-Transmmer Tx | 2-fach Transceiver TRX | 4fach-Receiver Rx und 4fach-Tranmer Tx |
| Anzahl Kanäle / Lichtwellenleiter | 2 | 4 | 4 | 8 |

## Patentansprüche

1. Mehrkanaliges optisches Modul
mit einem Anschluß-Port (1) zur Aufnahme und Verriegelung eines Steckverbinders und mit mehreren, dem Anschluß-Port (1) zugeordneten elektrooptischen Wandlern (26, 28),
- bei dem die Wandler über optische Pfade (31, 32) nebeneinander auf eine senkrecht zur Steckrichtung verlaufende Kopplungsebene (70) ausgerichtet sind,
- bei dem der Anschluß-Port (1) zur Aufnahme des Steckverbinders, der in einem Steckverbindergehäuse (10) einen mehrere Lichtwellenleiter (43, 44) führenden zylindrischen Steckerstift (18) enthält, eine zylindrische Aufnahmehülse (4) für den Steckerstift (18) und mit Formelementen (8, 9) des Steckverbindergehäuses (10) mechanisch zusammenwirkende Verriegelungselemente (2) aufweist,
und bei dem zur gegenseitigen Ausrichtung von Anschluß-Port (1) und Steckerstift (18) - bei Verwendung eines Steckerstiftes mit in einer zentralen Längsebene (24) verlaufenden Lichtwellenleitern (43, 44) - die Aufnahmehülse (4) mit Ausrichthilfen (14, 15) versehen ist, die mit korrespondierenden Ausrichthilfen (20, 21) am Steckerstift (18) derart zusammenwirken, daß im Bereich der Kopplungsebene (70) jeweils ein Wandler (26) individuell mit einem Ende (40) eines der Lichtwellenleiter koppelbar ist,
wobei die optischen Pfade (31, 32), über die die Wandler (26, 28) auf die Kopplungsebene ausgerichtet sind, in einem gemeinsamen Koppelkörper (30, 65, 87) verlaufen und zu den Wandlern hin aufgespreizt sind.

2. Modul nach Anspruch 1,
**dadurch gekennzeichnet, daß**
die Ausrichthilfen (14, 15) Längsstege oder Längsrippen sind, die innenseitig an der Aufnahmehülse ausgebildet sind.

3. Modul nach Anspruch 1,
**dadurch gekennzeichnet, daß**
die Ausrichthilfen (14, 15) Zentrierstifte sind, die beidseits der Längsachse (A) der Aufnahmehülse angeordnet sind.

4. Modul nach einem der Ansprüche 1 bis 3,
**dadurch gekennzeichnet, daß**
der Steckverbinder (10) zwei oder vier Lichtwellenleiter (43, 44) endseitig abschließt.

5. Modul nach einem der Ansprüche 1 bis 4,
**dadurch gekennzeichnet, daß**
die Wandler (58, 59) vertikal emittierende Lasersender sind, deren Emissionswellenlänge vorzugsweise 850nm oder 1300nm beträgt.

6. Modulanordnung mit zwei Modulen nach einem der Ansprüche 1 bis 5,
**dadurch gekennzeichnet, daß**
eines der Module (50) mit als Sendern ausgebildeten Wandlern (58) und das andere Modul (52) mit als Empfänger ausgebildeten Wandlern (59) bestückt ist.

7. Modulanordnung nach Anspruch 7,
**dadurch gekennzeichnet, daß**
beide Module (50, 52) in einem gemeinsamen Gehäuse (54) untergebracht sind, dessen Grundfläche 26mm * 40mm, vorzugsweise 25,40mm * 39,12mm, nicht überschreitet.

## Claims

1. Multichannel optical module having a connection port (1) for holding and locking a connector, and having a plurality of electrooptical transducers (26, 28) assigned to the connection port (1),
- in the case of which the transducers are aligned next to one another with a coupling plane (70), running perpendicular to the plugging direction, via waveguides (31, 32),
- in the case of which the connection port (1) for holding the connector, which contains in a connector housing (10) a cylindrical connector pin (18) guiding a plurality of optical conductors (43, 44), has a cylindrical holding sleeve (4) for the connector pin (18), and has locking elements (2) cooperating mechanically with shaped elements (8, 9) of the connector housing (10),
and in the case of which, for the purpose of mutual alignment of the connection port (1) and connector pin (18) - given the use of a connector pin with optical conductors (43, 44) running in a central longitudinal plane (24) - the holding sleeve (4) is provided with alignment aids (14, 15) which cooperate with corresponding alignments aids (20, 21) on the connector pin (18) in such a way that in the region of the coupling plane (70) one transducer (26) each can be coupled individually to an end (40) of one of the optical conductors,
the waveguides (31, 32) via which the transducers (26, 28) are aligned with the coupling plane run in a common coupling member (30, 65, 87) and are spread open towards the transducers.

2. Module as claimed in Claim 1, **characterized in that** the alignments aids (14, 15) are longitudinal webs or longitudinal ribs which are constructed on the inside of the holding sleeve.

3. Module as claimed in Claim 1, **characterized in that** the alignment aids (14, 15) are centring pins which are arranged on both sides of the longitudinal axis (A) of the holding sleeve.

4. Module as claimed in one of Claims 1 to 3, **characterized in that** the connector (10) terminates two or four optical conductors (43, 44) at the end.

5. Module as claimed in one of Claims 1 to 4, **characterized in that** the transducers (58, 59) are vertically emitting laser transmitters whose emission wavelength is preferably 850 nm or 1300 nm.

6. Module arrangement having two modules as claimed in one of Claims 1 to 5, **characterized in that** one of the modules (50) is fitted with transducers (58) constructed as transmitters, and the other module (52) is fitted with transducers (59) constructed as receivers.

7. Module arrangement as claimed in Claim 7, **characterized in that** the two modules (50, 52) are accommodated in a common housing (54) whose base area does not exceed 26 mm * 40 mm, preferably 25.40 mm * 39.12 mm.

## Revendications

1. Module optique à canaux multiples,
comportant une prise de raccordement (1) servant à recevoir et verrouiller un connecteur, et comportant plusieurs transducteurs électro-optiques (26, 28) associés à la douille de raccordement (1),
- dans lequel les transducteurs sont alignés côte-à-côte au moyen de trajets optiques (31, 32) sur un plan de couplage (70) perpendiculaire à la direction d'enfichage;
- dans lequel la prise de raccordement (1) comporte, pour loger le connecteur qui contient, dans un boîtier de connecteur (10), une broche cylindre du connecteur (18) guidant plusieurs guides d'ondes lumineuses (43, 44), une douille cylindrique de réception (45) pour la broche de connecteur (18) et des éléments de verrouillage (2) qui coopèrent mécaniquement avec les éléments conformés (8, 9) du boîtier (10) du connecteur,
et dans lequel pour l'alignement réciproque de la prise de raccordement (1) et de la broche de connecteur (18) - dans le cas de l'utilisation d'une broche de connecteur comportant des guides d'ondes lumineuses (43, 44) qui s'étendent dans un plan longitudinal central (24) - la douille de réception (4) est pourvue de éléments (14, 15) facilitant l'alignement, qui coopèrent avec des éléments facilitant l'alignement correspondants (20, 21) situés sur la broche de connecteur (18) de telle sorte qu'au niveau du plan de couplage (70), respectivement un transducteur (26) peut être couplé individuellement à une extrémité (40) de l'un des guides d'ondes lumineuses,
les trajets optiques (31, 32), sur lesquels les transducteurs (26, 28) sont alignés dans le plan de couplage, s'étendant dans un corps commun de couplage (30, 65, 87) et étant écartés l'un de l'autre en direction des transducteurs.

2. Module selon la revendication 1, **caractérisé en ce que** les éléments (14, 15) facilitant l'alignement sont des barrettes longitudinales ou des nervures longitudinales, qui sont formées sur le côté intérieur de la douille de réception.

3. Module selon la revendication 1, **caractérisé en ce que** les éléments (14, 15) facilitant l'alignement sont des tiges de centrage, qui sont disposées des deux côtés de l'axe longitudinal (A) de la douille de réception.

4. Module selon l'une des revendications 1 à 3, **caractérisé en ce que** le connecteur (10) ferme à leur extrémité deux ou quatre guides d'ondes lumineuses (43, 44).

5. Module selon l'une des revendications 1 à-4, **caractérisé en ce que** les transducteurs (58, 59) sont des émetteurs laser qui émettent verticalement et dont la longueur d'onde d'émission est égale de préférence à 850 ou à 1300 nm.

6. Dispositif à modules comportant deux modules selon l'une des revendications 2 à 5, **caractérisé en ce que** l'un des modules (50) est équipé de transducteurs (58) agencés en tant qu'émetteurs et que l'autre module (52) est équipé de transducteurs (59) agencés sous la forme de récepteurs.

7. Dispositif à modules selon la revendication 7 **caractérisé en ce que** les deux modules (50, 52) sont logés dans un boîtier commun (54), dont la surface de base ne dépasse pas 26 mm * 40 mm et de préférence 25,40 mm * 39,12 mm.
